# EUROPEAN PATENT SPECIFICATION

(11) **EP 0 421 556 B1**
(45) Date of publication and mention of the grant of the patent: **19.01.1994**
(21) Application number: 90202668.1
(22) Date of filing: 05.10.1990
(51) Int. Cl.: B62D 21/18, B60G 7/02, B60G 11/27

(54) **Air spring system for a vehicle**
Luftfedersystem für ein Fahrzeug
Système à ressort pneumatique pour un véhicule

(30) Priority: 06.10.1989 NL 8902496
(43) Date of publication of application: 10.04.1991
(73) Proprietor: WEWELER N.V., NL-7332 AP Apeldoorn (NL)
(72) Inventor: Aalderink, Derk Geert, NL-7245 NV Laren (NL)
(74) Representative: de Bruijn, Leendert C.

(56) References cited:
- EP-A- 0 325 002
- DE-A- 2 232 935
- GB-A- 819 223
- US-A- 3 197 228

## Description

The invention relates to an air spring system for a vehicle according to the preamble of claim 1.

Such systems are known from the left hand side of Fig. 3 of EP-A-0325002. In them an oblique support runs from each longitudinal frame beam inwards and downwards to the transverse connection to which each support is connected at some distance from the other essentially above the horizontal plane through the centre lines of the pivoting arms. As a result, less high requirements are imposed on the transverse connections in the frame, normally between the longitudinal runners thereof, so that the latter can even be absent in the zone of the spring brackets, which has advantages with respect to construction weight and for receiving on the frame, in as low a position as possible, special loads, for example, having parts extending downwards in the centre.

The object of the invention is to improve such systems so that it is possible to choose a lighter construction which can receive transverse forces very well, even with a frame which is not heavily and rigidly constructed and of which the longitudinal runners are able to retain some flexibility and torsional freedom.

For this purpose, a system as referred to in the preamble and according to the invention is characterized by the features of the characterizing part of claim 1.

The transverse forces on the construction are now taken up and transmitted virtually in the horizontal plane of the force centre of the connection of the supports to the transverse connection and virtually by the pivot connections of the spring brackets to the arms so that a flexible, that is to say light, embodiment of the frame is possible as a result of this construction and the disadvantages thereof with respect to the wheel mounting are compensated for by said construction and said construction itself can also be embodied in a light manner, inter alia because no additional bending moment occurs as a consequence of the tensile and compressive forces in the supports in the transverse connection.

Although the supports could be welded to the transverse connection next to each other on top thereof provided only that the extension of the neutral lines of the supports intersect each other at a point in said horizontal plane, it is strongly to be recommended that the system according to the invention is constructed so that the supports themselves extend further downwards, the transverse connection having, at the position of the connection to said supports, an upright web which has no transversely projecting flanges at the top and that said substantially vertical web part of each of the supports is substantially positioned in the plane of said upright web of the transverse connection and is each attached thereby to said web of the transverse connection at a different side.

Preferably, the invention is so embodied that said points of said vertical plane lie at some horizontal distance from the pivot centre line of the pivot connections.

Since the transverse forces tend to press the arms against a part of the pivot supports of the spring brackets or wear plates therein, the transverse connection will prevent this most effectively and virtually without bending moments in this position, as is to be discussed in yet greater detail and as is to be implemented differently depending on the circumstances.

The invention further relates to an advantageous further development of these principles, in particular aimed at simplicity of construction, low weight with effective force absorption and transmission, and to a favourable siting of the supports with respect to the vehicle frame being proposed for certain types of vehicles, all these features as yet to be described.

The invention will now be explained in greater detail with reference to the accompanying drawings. In these:
Fig. 1 is a horizontal elevation, in the longitudinal direction of a vehicle, of the system in an embodiment of the invention which is to be preferred and having a somewhat different construction on the left than on the right;
Fig. 2 is a detail section along the line II-II in Fig. 1;
Fig. 3 is a diagrammatic plan view of a shaft having wheels and an air spring system to explain the forces which occur;
Fig. 4 is a detail side elevation from the right in Fig. 1; and
Fig. 5 is a similar detail side elevation in another embodiment.

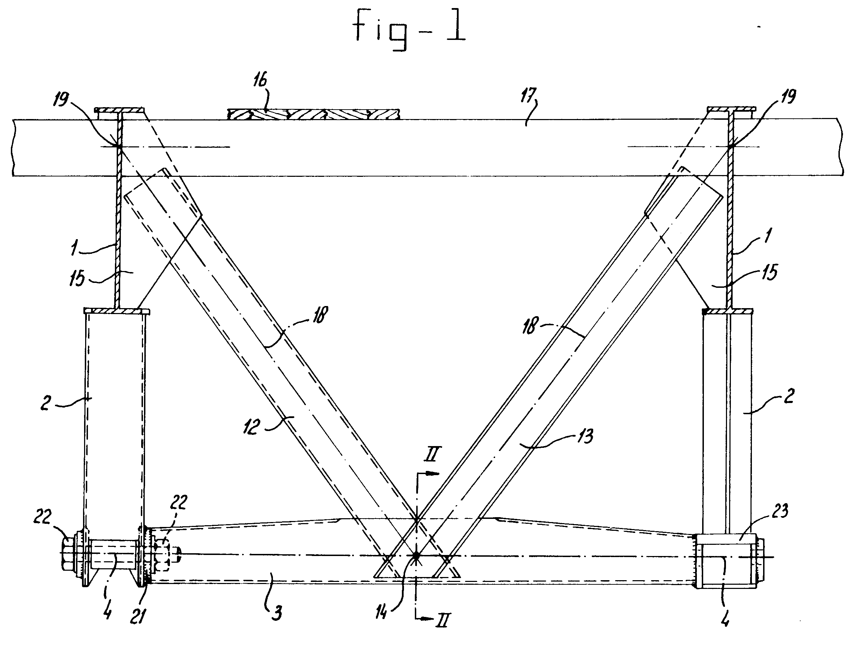

A vehicle has two longitudinal runners 1 of the frame, here constructed as I sections, and welded to the bottom of said runners near a wheel shaft mounting thereof are two spring brackets 2. Such spring brackets can have any desired form and are known in many constructions. A possible form is that shown in the EP-A- 0 352 002 by the Applicant, optionally having the connection given therein, which is narrow in the transverse direction, to said longitudinal runners 1, or having a rigid connection as shown in Fig. 1. In Fig. 1 a different embodiment has been chosen, however, at the bottom of the right-hand spring bracket 2 from that given in the earlier application, as yet to be described.

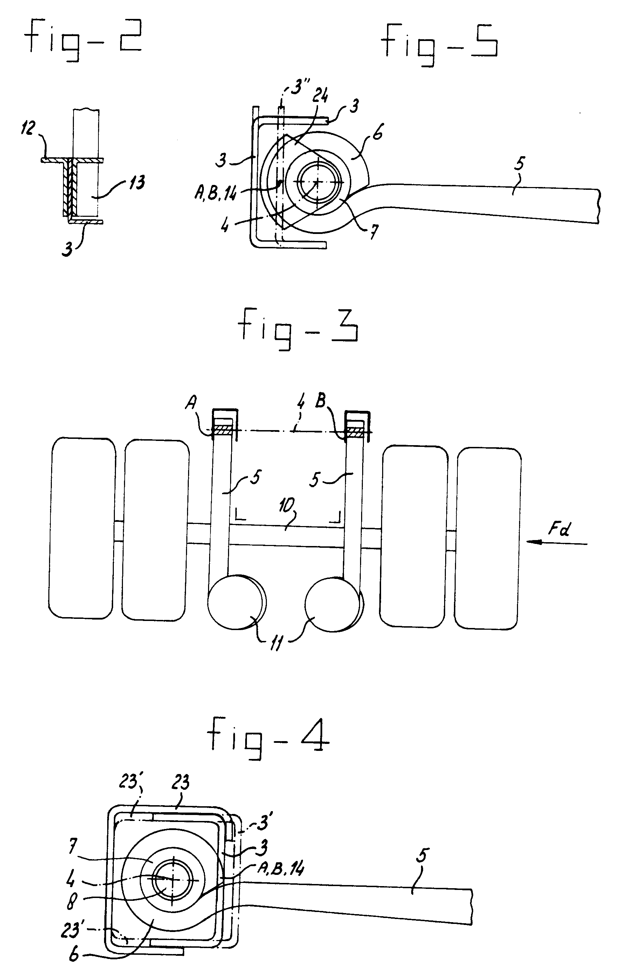

A transverse connection 3 connects the spring brackets 2 at the level of the centre lines 4 of their pivot pins 8, on each of which a supporting arm 5 acts, for example in the usual manner with a curved section 6 in which a rubber bush 7 is situated which embraces the pivot pin 8, can be permanently attached to curved section 6 and/or pin 8 and is under some compression between them (Fig. 4). Each arm 5 can be constructed very rigidly or more or less as a leaf spring, is attached at 9 (Fig. 3) to a wheel shaft 10, for example with the usual straps (not shown) and has beyond the latter a plateau on which an air spring bellows 11 is fitted which is supported at the other side against a part of the frame of the vehicle.

Over most of its length, the transverse connection 3 has a U-shaped section with upright base and horizontal legs (see dotted lines in Fig. 1). Near the centre of its length, the uppermost horizontal leg of the U is removed so that the transverse connection has a L-shaped form at this point (Fig. 2).

Two U-shaped supports 12 and 13 are attached to the upright leg of the L in the centre of the transverse connection 3, for example by welding but possibly, instead thereof, by a pivot pin. The legs of their Us are directed away from each other, as indicated clearly in Fig. 1. The bases of the U are attached to the upright leg of the L of the transverse connection 3, each at an opposite side, as Fig. 2 clearly shows. The mountings therefore lie in the same region, with approximately the point 14, which is situated in a horizontal plane through the centre line 4 of the pivot connections of the spring brackets (drawn in Fig. 1 as horizontal continuous dash-dot line), as centrepoint.

The bases of the U of the supports 12 and 13 are attached, preferably by welding, at the other end to gusset plates 15 which are welded to the frame beams 1 between and to their web and their horizontal, inwardly directed flanges.

In the case where the vehicle has a loading floor 16 resting on transverse runners 17, which in this case extend not only between the frame runners 1 but also continue outside thereof and are situated below the top flanges of the frame beams 1, it is advisable to attach the supports 12 and 13 to the gusset plates 15 in a manner such that their centre lines 18 (neutral zone) passing through the said point 14 at the transverse connection 3 intersect the upright webs of the frame runners 1 at the level of the neutral zone of the transverse runners 17 (even if the latter are situated somewhat to the side, in front of or behind the gusset plates 15). The loading forces are transmitted in this way to the wheels as favourably as possible as regards deformations and light weight of the construction.

How the transverse connection 3 is attached to a welding plate 21 of the spring bracket is shown on the left in Fig. 1. The pivot pin 8 (Fig. 4) forms the bolt shank of a bolt 22 and is passed through the plates 21.

On the right in Fig. 1, this connection is of different construction and in this case a tubular part 23, which is largely open at the side of the support arm 5, is welded to the transverse connection 3. In the construction of Fig. 1, this tube is virtually butt-welded to the end of the transverse connection 3 and this corresponds to the shape of this part which is partially indicated with dash-dot lines and elsewhere with solid lines in Fig. 4, the sections thereof with dash-dot lines being indicated by 23'. The tubular part 23 may, however, also be constructed as a single whole with the transverse connection 3 as a direct extension thereof. It may also grip around the end of the transverse connection 3, in that case somewhat extended outwards, and thus be welded thereto, as is seen from the solid lines in Fig. 4.

Now referring specifically to Fig. 3 and 4, it is the case that a transverse force F_{d} between wheels and frame tends to press the supporting arms 5 at A and B (as the centre or point of action of the resultant of the forces) against the pivot supports of the spring brackets 2, which points A and B are situated at some distance from the pivot centre lines 4. In Fig. 4 the points A and B are indicated in side elevation as regards their position. Although Fig. 4 is essentially a side elevation, different parts lying in front of and behind one another are shown by solid lines.

Within the scope of the invention it is advisable to site the upright leg of the transverse connection 3 in a vertical plane which passes through said points A and B which then lie in turn in one line with nodal point 14 of the supports 12 and 13. In this way, virtually no moments are produced in this construction in absorbing transverse forces and the construction can be as light as possible.

For practical reasons, the upright leg of the transverse connection 3 and therefore nodal point 14 can be displaced somewhat further from the pivot centre line 4 of the spring brackets, as is indicated by 3' in Fig. 4.

Normally, annular wearing plates are fitted around each pivot pin 8 in the spring brackets inside the supports therefor, usually welded therein, with which wearing plates the curved parts 6 of the support arms 5 come into contact in the case of transverse forces so that the points A and B are situated on said wearing plates.

Wearing plates can be used which the curved parts 6 of the supporting arms 5 can only come into contact with at the other side of the pivot centre line, which has the advantage that the curved parts are more favourably loaded from a point of view of torsion. It is then advisable to displace the upright web of the transverse connection 3 to that side. Thus, Fig. 5 shows wearing plates 24 with approximately circular sector shape, the points A and B being situated approximately at the point indicated therein during the occurrence of transverse forces. An upright web of the transverse connection, indicated by dash-dot lines and by 3'', is the most preferable in this case, but a positioning as indicated by solid lines and with 3 is then a good approximation.

In the case of Fig. 4 and 5, it may be advisable to choose the positions as indicated by 3 in Fig. 4 and 3'' in Fig. 5 for the web of the transverse connection in the central section thereof, where the supports 12 and 13 are attached thereto, in order to then provide the transverse connection with a deflection at a distance on either side of said supports near the spring brackets so that the web of the transverse connection, seen in Fig. 4, is displaced over a short or somewhat longer distance starting from said central section from 3 to 3', and, seen in Fig. 5, from 3'' to 3. The transverse connection may also extend straight on the full width and be welded to an upright plate such as 21 in Fig. 1 at the inside of the spring brackets.

Of course, other connections between transverse connection 3 and brackets 2, for example with bolts, are possible.

The embodiment in Fig. 5 with the horizontal bottom leg of the U-shaped, and in the centre L-shaped, transverse connection 3 directed to the back is more advantageous than the reverse positioning of Fig. 4 with said leg to the front, both with regard to impacts due to stones and also with regard to contamination. With a positioning as shown by 3 with solid lines in Fig. 5, the transverse connection 3 can extend straight on past both pivots, which promotes simplicity.

## Claims

1. Air spring system for a vehicle having spring brackets (2) fitted to a frame (1) and extending downwards, each at one side of the vehicle, on which supporting arms (5)act so as to pivot (at 4), each connected to the wheel shaft (10) to be supported resiliently and acting on an air spring (11), having a transverse connection (3) between the spring brackets (2) at a distance below the frame (1) and having at each side of the vehicle a support (12,13) which extends from a frame section (1) immediately above a spring bracket (2) obliquely downwards and is connected at the bottom to said transverse connection (3), characterized in that a web part of the supports (12,13) is situated in a substantial vertical plane, which passes through points (4,A,B) in, or near, the pivot connection (4) of both spring brackets (2) and in that said web parts are connected to the transverse connection (3) so that the neutral lines (18) of the supports (12,13) with respect to bending or the extensions thereof intersect one another on the transverse connection (3) at a point (14) lying in a horizontal plane which substantially passes through both pivot connections (4).

2. System according to Claim 1, wherein the transverse connection (3) has, at the position of the connection to said supports (12,13), an upright web which has no transversely projecting flanges at the top and wherein said substantially vertical web part of each of the supports (12,13) is substantially positioned in the plane of the said upright web of the transverse connection (3) and is each attached thereby to said web of the transverse connection (3) at a different side.

3. System according to Claim 2, wherein the transverse connection (3) is U-shaped over most of its length and is L-shaped in the centre, where the supports (12,13) are connected thereto, with the two legs of the L each in one plane with a leg of said U-shape, the other leg of the U-shape being absent in said centre.

4. System according to Claim 1, wherein said points (A,B; at 3,3',3'') of said vertical plane are situated at some horizontal distance from the pivot centre line (4) of the pivot connections (2).

5. System according to Claim 4, wherein the parts (6), each gripping around a pivot pin (8), of the supporting arms (5) are situated between wearing plates in the spring brackets (2), with which wearing plates said parts (6) of the arms (5) come into contact at the side of the pivot pin (8) directed towards the wheel shaft (10), and wherein said horizontal distance (4 to A,B) from the centre line (4) of the pivot pin (8) is directed towards the wheel shaft (10).

6. System according to Claim 4, wherein the parts (6), each gripping around a pivot pin (8), of the supporting arms are situated between wearing plates (24) in the spring brackets, with which wearing plates said parts (6) can come into contact only at the side of the pivot pin (4) directed away from the wheel shaft (10), and wherein said horizontal distance (4 to A,B) from the centre line (4) of the pivot pin is directed away from said wheel shaft (10).

7. System according to Claim 5 or 6, wherein said points (A,B)of said vertical plane are situated in a transverse plane which runs approximately through the position of application of the resultant force of the lateral compressive forces on said wearing plates (24) if transverse forces occur between wheel shaft (10) and frame (1).

8. System according to Claim 7, wherein an upright web of the transverse connection (3) is bent out of its vertical plane near the pivot connections (4) of the spring brackets (2) in order to adjoin an upright wall, situated outside said plane, of a partial encasing (23) of the pivot connections (4).

9. System according to any of the preceding claims, wherein the transverse connection (3) is extended at each end with a tubular part (23,23'), open at the side of the arms (5) and surrounding the pivot connections (4) of the arms (5), the spring brackets (2) being mounted at the top of said tubular parts (23,23').

10. System according to any of the preceding claims, in which the supports (12,13) are connected to the vehicle frame so that their said neutral lines (18) with respect to bending pass the vertical neutral zone with respect to transverse bending of longitudinal frame beams (1) of the vehicle in points (19) at a height near the centre of the height of transverse runners (17) of the vehicle frame projecting beyond said longitudinal frame beams (1) to carry a loading surface (16).

## Patentansprüche

1. Luftfedersystem für ein Fahrzeug mit Federböcken (2), die an einem Rahmen (1) angebracht sind und sich nach unten erstrecken, wobei sich auf jeder Seite des Fahrzeuges ein Federbock befindet, an dem Stützarme (5) wirken, um zu schwenken (bei 4), jeder Stützarm mit der elastisch zu tragenden Radwelle (10) verbunden ist und auf eine Luftfeder (11) einwirkt, mit einer mit einem Abstand unterhalb des Rahmens (1) befindlichen Querverbindung (3) zwischen den Federböcken (2) und mit einem an jeder Seite des Fahrzeuges befindlichen Träger (12, 13), der sich von einem Rahmenabschnitt (1) unmittelbar oberhalb eines Federbockes (2) schräg nach unten erstreckt und an seinem untersten Teil mit der genannten Querverbindung (3) verbunden ist,
**dadurch gekennzeichnet, daß**
ein Stegabschnitt der Träger (12, 13) in einer im wesentichen senkrechten Ebene angeordnet ist, die durch die Punkte (4, A, B) in oder nahe der Achszapfenverbindung (4) der beiden Federböcke (2) verläuft und dadurch, daß die genannten Stegabschnitte so mit der Querverbindung (3) verbunden sind, daß sich die neutralen Fasern (18) der Träger (12, 13) bezüglich Biegung oder deren Verlängerungen einander auf der Querverbindung (3) in einem Punkt (14) schneiden, der in einer horizontalen Ebene liegt, die im wesentlichen durch beide Achszapfenverbindungen (4) verläuft.

2. Luftfedersystem für ein Fahrzeug nach Anspruch 1,
**dadurch gekennzeichnet, daß**
die Querverbindung (3) an der Stelle der Verbindung mit den genannten Trägern (12, 13) einen aufrechten Steg aufweist, der keinen quer überhängenden Gurt an der Oberseite umfaßt, und dadurch, daß der genannte im wesentlichen vertikale Stegabschnitt eines jeden Trägers (12, 13) im wesentlichen in der Ebene des genannten aufrechten Steges der Querverbindung (3) angeordnet ist und jeder Träger an dem genannten Steg der Querverbindung (3) auf einer verschiedenen Seite angebracht ist.

3. Luftfedersystem für ein Fahrzeug nach Anspruch 2,
**dadurch gekennzeichnet, daß**
die Querverbindung (3) im überwiegenden Bereich ihrer Länge ein U-Profil und in der Mitte, wo die Träger (12, 13) angeschlossen werden, ein L-Profil aufweist, wobei die beiden Schenkel des L-Profils jeweils in einer Ebene mit einem Schenkel des genannten U-Profils liegen und der andere Schenkel des U-Profils in der genannten Mitte fehlt.

4. Luftfedersystem für ein Fahrzeug nach Anspruch 1,
**dadurch gekennzeichnet, daß**
die genannten Punkte (A, B; bei 3, 3', 3'') der genannten vertikalen Ebene in einem gewissen horizontalen Abstand von der Achszapfen-Mittellinie (4) der Achszapfenverbindung (4) angeordnet sind.

5. Luftfedersystem für ein Fahrzeug nach Anspruch 4,
**dadurch gekennzeichnet, daß**
die Teile (6), von denen jedes einen Gelenkzapfen (8) umgreift, der Stützarme (5) zwischen Schleifblechen in den Federböcken (2) angeordnet sind, wobei die genannten Teile (6) der Arme (5) mit den Schleifblechen auf der Seite des Gelenkzapfens (8), der auf die Radwelle (10) hin ausgerichtet ist, in Berührung kommen, und dadurch, daß der genannte horizontale Abstand (4 bis A, B) von der Mittellinie (4) des Gelenkzapfens (8) auf die Radwelle (10) hin ausgerichtet ist.

6. Luftfedersystem für ein Fahrzeug nach Anspruch 4,
**dadurch gekennzeichnet, daß**
die Teile (6), von denen jedes ein Gelenkzapfen (8) umgreift, der Stützarme zwischen Schleifblechen (24) in den Federböcken angeordnet sind, wobei die genannten Teile (6) mit den Schleifblechen nur auf der Seite des Gelenkzapfens (8), der von der Radwelle (10) abgewandt ist, in Berührung kommen können, und dadurch, daß der genannte horizontale Abstand (4 bis A, B) von der Mittellinie (4) des Gelenkzapfens von der genannten Radwelle (10) abgewandt ist.

7. Luftfedersystem für ein Fahrzeug nach Anspruch 5 oder 6,
**dadurch gekennzeichnet, daß**
die genannten Punkte (A, B) der genannten vertikalen Ebene in einer querverlaufenden Ebene angeordnet sind, die ungefähr durch den Angriffspunkt der resultierenden Kraft der Seitendruckkräfte auf die genannten Schleifbleche (24) verläuft, wenn Querkräfte zwischen der Radwelle (10) und dem Rahmen (1) auftreten.

8. Luftfedersystem für ein Fahrzeug nach Anspruch 7,
**dadurch gekennzeichnet, daß**
ein aufrechter Steg der Querverbindung (3) aus seiner vertikalen Ebene nahe der Achszapfenverbindungen (4) der Federböcke (2) herausgebogen ist, um eine aufrechte Wand, die außerhalb der genannten Ebene angeordnet ist, eines Teilgehäuses (23) der Achszapfenverbindungen (4) anzufügen.

9. Luftfedersystem für ein Fahrzeug nach einem der vorhergehenden Ansprüche,
**dadurch gekennzeichnet, daß**
die Querverbindung (3) an jedem Ende mit einem röhrenartigen Teil (23, 23'), das auf der Seite der Arme (5) offen ist und die Achszapfenverbindungen (4) der Arme (5) umgibt, verlängert ist und die Federböcke (2) auf der Oberseite der genannten röhrenartigen Teile (23, 23') angebracht sind.

10. Luftfedersystem für ein Fahrzeug nach einem der vorhergehenden Ansprüche,
**dadurch gekennzeichnet, daß**
die Träger (12, 13) so mit dem Fahrzeugrahmen verbunden sind, dass ihre genannten neutralen Fasern (18) bezüglich Biegung die vertikalen neutralen Fasern bezüglich Querbiegung der Längsrahmen-Träger (1) des Fahrzeuges in Punkten (19) in einer Höhe nahe der Mitte der Höhe von Querläufern (17) des Fahrzeugrahmens durchlaufen, wobei die Querläufer über die genannten Längsrahmen-Träger (1) hinausragen, um eine Ladefläche (16) zu tragen.

## Revendications

1. Système à ressort pneumatique pour un véhicule comprenant des consoles de ressorts (2) fixées à un chassis (1) et s'étendant vers le bas, une de chaque côté du véhicule, sur lesquelles agissent des bras supports (5) de manière à pivoter (en 4), chaque bras support étant relié à un arbre de roue (10) devant être supporté de manière élastique et agissant sur un ressort pneumatique (11), ayant une liaison transversale (3) entre les consoles de ressorts (2) à une certaine distance au dessous du chassis (1) et ayant de chaque côté du véhicule un support (12, 13) qui part d'une section du chassis (1) immédiatement au dessus d'une console de ressorts (2) en oblique vers le bas et qui est relié à sa partie inférieure à la dite liaison transversale (3), **caractérisé :**
- en ce qu'une partie de plaque des supports (12, 13) est située dans un plan sensiblement vertical, qui passe par des point (4, A, B) de la liaison pivotante (4) des deux consoles de ressorts (2) ou à proximité de ceux-ci et
- en ce que les dites parties de plaque sont reliées à la liaison transversale (3) de manière que les lignes neutres (18) des supports (12, 13) en rapport avec les flexions ou extensions de ces lignes se coupent sur la liaison transversale (3) en un point (14) situé dans un plan horizontal qui passe sensiblement par les deux liaisons pivotantes (4).

2. Système selon la revendication 1, dans lequel la liaison transversale (3) présente, à l'endroit de la liaison des dits supports (12, 13), une plaque verticale qui n'a pas d'aile faisant saillie transversalement à la partie supérieure et dans laquelle la dite partie de plaque sensiblement verticale de chacun des dits supports (12, 13) ets sensiblement placée dans le plan de la dite plaque verticale de la liaison transversale (3) et est fixée à la dite plaque de la liaison transversale (3) sur un côté différent.

3. Système selon la revendication 2, dans lequel la liaison transversale (3) est un profilé en U sur la majeure partie de sa longueur et un profilé en L au centre, à l'endroit où les supports (12, 13) sont reliés sur cette traverse, les deux bras du L étant chacun dans un même plan avec une patte du dit profilé en U, l'autre patte du profilé en U étant supprimée dans la dite partie centrale.

4. Système selon la revendication 1 dans lequel les dits points (A, B ; en 3, 3', 3") du dit plan vertical sont situés à une certaine distance horizontale de l'axe central de pivotement (4) des liaisons pivotantes (2).

5. Système selon la revendication 4, dans lequel les parties (6), venant en prise chacune autour d'un arbre de pivotement (8) des bras supports (5), sont situées entre des plaques d'usure des consoles de ressorts (2), les dites parties (6) des bras (5) venant en contact avec ces plaques d'usure sur le côté de l'arbre de pivotement (8) dirigé vers l'arbre de roue (10), et dans lequel la dite distance horizontale (4 à A, B) par rapport à l'axe central (4) de l'arbre de pivotement (8) est orientée vers l'arbre de roue (10).

6. Système selon la revendication 4, dans lequel les parties (6), venant en prise chacune autour d'un arbre de pivotement (8) des bras supports, sont situées entre des plaques d'usure (24) dans les consoles de ressorts, les dites plaques (6) venant en contact avec ces plaques d'usure uniquement sur le côté de l'arbre de pivotement (4) situé du côté opposé à l'arbre de roue (10), et dans lequel la dite distance horizontale (4 à A, B) par rapport à l'axe central (4) de l'arbre de pivotement est orientée en s'éloignant du dit arbre de roue (10).

7. Système selon la revendication 5 ou 6, dans lequel les dits points (A, B) du dit plan vertical sont situés dans un plan transversal qui passe sensiblement par la position d'application de la force résultante des forces latérales de compression exercées sur les dites plaques d'usure (24) si des forces transversales interviennent entre l'arbre de roue (10) et le chassis (1).

8. Système selon la revendication 7, dans lequel une plaque montante de la liaison transversale (3) est coudée en dehors de son plan vertical à proximité des liaisons pivotantes (4) des consoles de ressorts (2) pour rejoindre une paroi verticale, située en dehors du dit plan, d'un boîtier partiel (23) des dites liaisons pivotantes (4).

9. Système selon l'une quelconque des revendications précédentes, dans lequel la liaison transversale (3) se prolonge de chaque côté par une partie tubulaire (23, 23'), ouverte du côté des bras (5) et entourant les liaisons pivotantes (4) des bras (5), les consoles de ressorts (2) étant montées sur le dessus des dites pièces tubulaires (23, 23').

10. Système selon l'une quelconque des revendications précédentes, dans lequel les supports (12, 13) sont reliés au chassis du véhicule de manière que leur ligne neutre (18) en rapport avec la flexion passe par la zone verticale neutre en rapport au fléchissement transversal des poutres longitudinales (1) du chassis du véhicule en des points (19) à une hauteur voisine du centre de la hauteur de poutres transversales (17) du chassis du véhicule faisant saillie au delà des dites poutres longitudinales (1) du chassis pour supporter une surface de chargement (16).
